# EUROPÄISCHE PATENTANMELDUNG

(11) **EP 1 529 715 A2**
(43) Veröffentlichungstag der Anmeldung: **11.05.2005**
(21) Anmeldenummer: 04025032.6
(22) Anmeldetag: 21.10.2004
(51) Int. Cl.: B62D 5/00, B62D 5/04, B62D 5/06, B62D 5/065

(54) **Nutzfahrzeuglenkung**

(30) Priorität: 05.11.2003 DE 10351618
(71) Anmelder: MAN Nutzfahrzeuge Aktiengesellschaft, 80995 München (DE)
(72) Erfinder: Negele, Klaus, Dipl.-Ing., 85622 Feldkirchen (DE); Hipp, Eberhard, Dipl.-Ing., 80798 München (DE)

(57) **Zusammenfassung**

Eine Nutzfahrzeuglenkung mit einem Lenkgetriebe 10, welches am Getriebeeingang eingeleitete Lenkbewegungen über eine im Getriebegehäuse 12 drehbar gelagerte Welle 13 und einen durch die Wellendrehung entlang der Welle 13 bewegbaren Kolben 14 auf einen Lenkstockhebel 32 überträgt, und mit einer hydraulischen Hilfskraftverstärkereinrichtung 16, welche durch gesteuerte Druckbeaufschlagung mit einer Hydraulikflüssigkeit die Kolbenbewegung unterstützt, wobei eine zusätzliche Hilfskraftverstärkereinrichtung vorgesehen ist, die einen Elektromotor 17 aufweist, dessen Drehmoment über ein ins Langsame übersetzendes Getriebe 18 auf die Welle 13 übertragen wird. Dabei wird bis zu einer bestimmten vom Lenkstockhebel 32 übertragenen Maximalkraft nur das Drehmoment des Elektromotors 17 auf die Welle 13 ohne hydraulische Druckbeaufschlagung des Kolbens 14 übertragen.

## Beschreibung

Die Erfindung betrifft eine Nutzfahrzeuglenkung nach dem Oberbegriff des Patentanspruches 1.

Eine derartige bei Lastkraftwagen oder Bussen zum Einsatz kommenden Lenkung besitzt ein Lenkgetriebe, welches am Getriebeeingang eingeleitete, vom Lenkrad ausgehende Lenkbewegungen auf einen am Getriebeausgang vorgesehenen Lenkstockhebel überträgt. Vom Lenkstockhebel wird die Bewegung auf den Achsschenkel oder die Spurstange des Fahrzeugs übertragen. Im Lenkgetriebe werden die Lenkbewegungen über eine im Getriebegehäuse drehbar gelagerte Welle und einen durch die Wellendrehung infolge Gewindeeingriffs entlang der Welle bewegbaren Kolben auf den Lenkstockhebel übertragen. Ferner ist eine hydraulische Hilfskraftverstärkereinrichtung vorgesehen, welche durch gesteuerte Druckbeaufschlagung mittels einer Hydraulikflüssigkeit die Kolbenbewegung im Lenkgetriebe unterstützt. Das genannte Lenkgetriebe wird auch als Schraublenkgetriebe bezeichnet.

Damit die hydraulische Hilfskraftverstärkereinrichtung immer leistungsbereit ist, wird bei bekannten Nutzfahrzeuglenkungen die Hydraulikflüssigkeit ständig durch eine Ventileinrichtung umgepumpt. Dabei wird eine Leistung von ca. 1.000 W im Mittel ständig verbraucht. Hieraus resultiert ein erhöhter Kraftstoffverbrauch, insbesondere Dieselkraftstoffverbrauch von etwa 0, 9 l/100 km.

Aufgabe der Erfindung ist es, eine Nutzfahrzeuglenkung der eingangs genannten Art zu schaffen, bei welcher der Energieverbrauch für die Hilfskraftverstärkereinrichtung erheblich verringert wird.

Diese Aufgabe wird erfindungsgemäß durch die kennzeichnenden Merkmale des Patentanspruches 1 gelöst.

Durch die Erfindung wird eine zusätzliche Hilfskraftverstärkereinrichtung in Form eines Elektromotors vorgesehen, dessen Drehmoment über ein ins Langsame übersetzendes Getriebe auf die Welle des Lenkgetriebes übertragen wird. Dabei wird unterhalb einer bestimmten Maximalkraft (Kraftschwelle), welche vom Lenkstockhebel auf die Lenkschubstange übertragen wird, nur das Drehmoment des Elektromotors auf die Welle des Lenkgetriebes übertragen, ohne dass dabei eine Druckbeaufschlagung mit der Hydraulikflüssigkeit am Kolben stattfindet. Dies kann dadurch erreicht werden, dass die hydraulische Hilfskraftverstärkereinrichtung unterhalb der Maximalkraftschwelle abgeschaltet bleibt. Bei Überschreiten der Kraftschwelle der vom Lenkstockhebel übertragenen Kraft kann in vorteilhafter Weise die gesteuerte Druckbeaufschlagung der Kolbenbewegung durch die hydraulische Hilfskraftverstärkereinrichtung zugeschaltet werden. Dies kann durch Einschalten der hydraulischen Hilfskraftverstärkereinrichtung erfolgen.

Für diese gesteuerte hydraulische Druckbeaufschlagung der Kolbenbewegung kann eine elektrisch gesteuerte Ventileinrichtung für die Zufuhr der Hydraulikflüssigkeit zu den beidseits des Kolbens im Lenkgetriebe vorhandenen Druckräumen vorgesehen sein. Die gesteuerte Zufuhr der Hydraulikflüssigkeit kann dabei in Abhängigkeit von einer Messung des Drehmoments, welches zwischen dem Lenkrad und dem Eingang des Lenkgetriebes gemessen wird, erfolgen. Ferner kann die Steuerung in Abhängigkeit von der vom Lenkstockhebel übertragenen Kraft erfolgen. Beispielsweise kann diese Kraft durch Messung des vom Elektromotor gezogenen Motorstroms erfolgen. Außerdem kann die elektrisch gesteuerte Hydraulik-Druckbeaufschlagung bei Unterschreitung einer bestimmten Fahrgeschwindigkeit des Nutzfahrzeugs, beispielsweise 5 km/h zugeschaltet werden. Es ist jedoch auch möglich, eine Kombination aus diesen Kriterien für die Zuschaltung der elektrisch gesteuerten Hydraulik-Druckbeaufschlagung zur Unterstützung der Kolbenbewegung und zur fortlaufenden Steuerung auszuwerten.

Bei der Unterstützung der Kolbenbewegung im Lenkgetriebe allein durch die elektromotorischen Hilfskraftverstärkereinrichtung unterhalb der vom Lenkstockhebel übertragenen Kraftschwelle werden am Lenkstockhebel bei normalen Fahrbetrieb im Mittel 20 W abgegeben.

Mit einem Elektromotor, welcher beispielsweise ein Drehmoment von 2 Nm, welches mittels eines Getriebes mit einer Übersetzung i = 50 auf die Welle des Lenkgetriebes übertragen wird, können bei einer Lenkgetriebeübersetzung 1 : 22 und einer entsprechenden Lenkstockhebellänge Maximalkräfte von 8 kN an der Lenkschubstange, welche vom Lenkstockhebel betätigt wird, erreicht werden. Damit sind praktisch alle normalerweise vorkommenden Fahrsituationen abgedeckt. Wie oben schon erläutert, wird bei höheren Kräften die elektrisch gesteuerte Hydraulik-Druckbeaufschlagung des Kolbens im Lenkgetriebe zugeschaltet.

Die Kraftschwelle, bis zu welcher die elektromotorische Hilfskraftverstärkereinrichtung allein ohne hydraulische Hilfskraftverstärkereinrichtung betrieben wird, hängt vom Typ des Nutzfahrzeugs und dessen Einsatzgebiet und der entsprechenden Dimensionierung des Lenkgetriebes, dessen Übersetzung und der Lenkstockhebellänge ab. Mit Hilfe eines geeigneten Elektromotors und zugeordnetem Getriebe kann ein breiter Bereich von Fahrsituationen abgedeckt werden. Selbst bei einem Gesamtwirkungsgrad der sich hauptsächlich aus den Wirkungsgraden von Generator, Motor und Getriebe zusammensetzt, ergibt sich bei einem Energieverbrauch von brutto 200 W im Mittel eine Verringerung des Energieverbrauchs um den Faktor 5 gegenüber einer herkömmlichen hydraulischen Hilfskraftverstärkereinrichtung, bei welcher die Hydraulikflüssigkeit ständig umgepumpt wird, um diese leistungsbereit zu halten.

Bei fehlerhaftem Betrieb oder Ausfall der elektromotorischen Hilfskraftverstärkereinrichtung kann eine in herkömmlicher Weise mechanisch gesteuerte Ventileinrichtung zur Unterstützung der Kolbenbewegung vorgesehen sein. Diese beinhaltet einen Torsionsstab, über welchen die Lenkbewegungen auf die Welle des Lenkgetriebes übertragen wird. In Abhängigkeit von der vom Lenkstockhebel übertragenen Kraft tordiert der Torsionsstab und betätigt dabei eine Ventileinrichtung mit beispielsweise schlitzförmigen Ventilöffnungen. Der Öffnungsquerschnitt wird durch die Tordierung des Torsionsstabes eingestellt. Zur gesteuerten Druckbeaufschlagung der Kolbenbewegung wird die Hydraulikflüssigkeit von einer Hydraulikpumpe, welche an den Verbrennungsmotor angekuppelt ist oder von einem Elektromotor angetrieben wird, ständig durch die Ventileinrichtung umgepumpt.

Weiterhin kann der elektromechanische Antrieb zur Ausführung von Fahrerassistenzsystemen, wie beispielsweise Seitenstörgrößenkompensation, herangezogen werden.

Weiterhin kann die erfindungsgemäße Lenkung auch bei Personenkraftwagen angewandt werden.

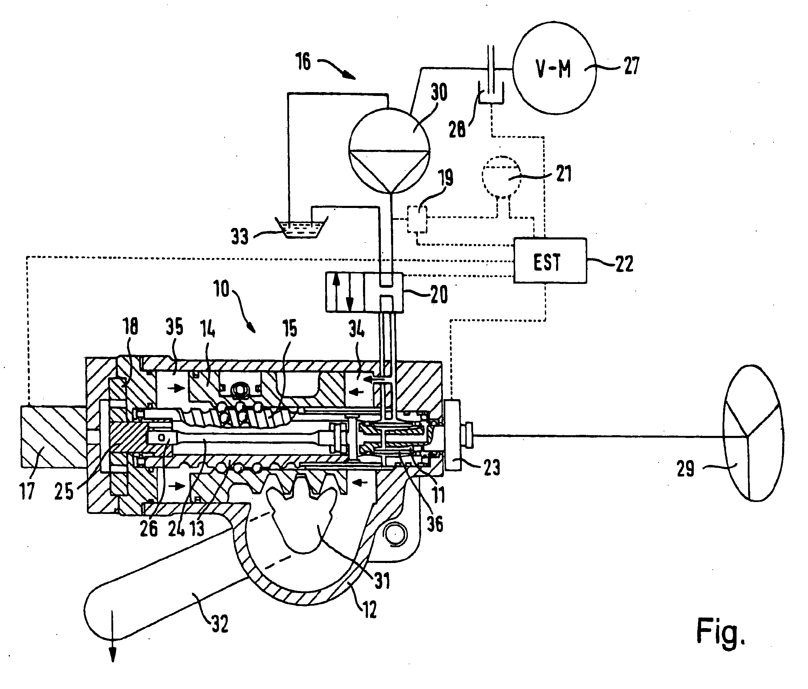

Anhand der Figur wird an einem Ausführungsbeispiel die Erfindung noch näher erläutert.

Bei einer in der Figur dargestellten Nutzfahrzeuglenkung, beispielsweise für einen Lastkraftwagen oder einen Omnibus, werden von einem Lenkrad 29 ausgehende Lenkbewegungen in einen Getriebeeingang eines Lenkgetriebes 10 eingeleitet. Ausgangsseitig werden die Lenkbewegungen auf einen an einer Segmentwelle 31 vorgesehenen Lenkstockhebel 32 übertragen. Vom Lenkstockhebel 32 wird die Lenkbewegung über eine nicht näher dargestellte Lenkschubstange auf einen Achsschenkel oder eine Spurstange des Fahrzeugs übertragen.

Im Getriebegehäuse 12 ist eine als Hohlwelle ausgebildete Welle 13 drehbar gelagert. In einem Gewinde 15 der Welle 13 laufen Kugeln, die in ein entsprechendes Gewinde an einer Kugelmutter, welche einen bewegbaren Kolben 14 bildet, eingreifen. Im Hohlraum der Welle 13 befindet sich ein Torsionsstab 24, welcher mit seinem von der Eingangsseite des Lenkgetriebes 10 abgewandten Stabende in einer Befestigungsstelle 26 mit der Welle 13 drehfest verbunden ist. Am anderen Stabende wird die vom Lenkrad 29 ausgehende Lenkbewegung über einen Drehschieber einer Ventileinrichtung 11 in bekannter Weise übertragen. Die von der eingeleiteten Lenkbewegung verursachten Drehung der Welle 13 wird mittels der endlosen Kugelreihe im Gewinde 15 reibungsarm auf den als Kugelmutter ausgebildeten Kolben 14 übertragen und in eine Axialbewegung des Kolbens 14 umgewandelt. Am Kolben 14 ist eine Verzahnung vorgesehen, welche in eine Verzahnung der Segmentwelle 31 eingreift. Hierdurch wird die Axialbewegung des Kolbens 14 in eine entsprechende Schwenkbewegung der Segmentwelle umgesetzt. Durch die Schwenkbewegung der Segmentwelle 31 wird am Ausgang des Lenkgetriebes 10, wie oben schon erläutert, die entsprechende Lenkbewegung des Lenkstockhebels 32 bewirkt.

Das in der Figur dargestellte Ausführungsbeispiel einer Nutzfahrzeuglenkung besitzt eine elektromechanische Hilfskraftverstärkereinrichtung mit einem Elektromotor 17, dessen Drehmoment über ein ins Langsame übersetzendes Getriebe 18 unmittelbar auf die Welle 13 übertragen wird. Der Elektromotor kann beispielsweise ein Ausgangsdrehmoment von 2 Nm liefern. Das Getriebe besitzt eine relativ hohe Übersetzung ins Langsame von beispielsweise i = 50. Auf diese Weise kann vom Elektromotor auf die Welle 13 ein Drehmoment von 100 Nm aufgebracht werden. In Abhängigkeit von den Anforderungen an das Nutzfahrzeug kann ein Elektromotor 17 mit hiervon abweichendem Drehmoment und ein Getriebe 18 mit hiervon unterschiedlicher Übersetzung ins Langsame gewählt werden. Für das Getriebe kann beispielsweise ein Harmonic-Getriebe verwendet werden. Es kann jedoch auch ein anderes geeignetes Getriebe mit entsprechender Übersetzung zum Einsatz kommen. Ein Abtriebselement 25 des Getriebes 18 ist drehfest mit der Welle 13 in der Nähe einer Befestigungsstelle 26 eines Torsionsstabes 24, dessen Funktion noch erläutert wird, verbunden.

Mit Hilfe einer derartigen elektromechanischen Hilfskraftverstärkereinrichtung können mit relativ niedrigem Energieverbrauch im wesentlichen alle im normalen Fahrbetrieb des Nutzfahrzeugs vorkommenden Fahrsituationen abgedeckt werden. Bei einer Übersetzung im Lenkgetriebe 10 von 1 : 22 und einer entsprechenden Lenkstockhebellänge lässt sich eine Maximalkraft von ca. 8 kN an der mit dem Lenkstockhebel 32 verbundenen Lenkschubstange erreichen. Bei höheren Kräften, welche diese Kraftschwelle überschreiten, kann in vorteilhafter Weise die hydraulische Hilfskraftverstärkereinrichtung 16 zugeschaltet werden. Diese enthält eine Hydraulikpumpe 30, welche über eine Kupplung 28 an einen Verbrennungsmotor 27 (Dieselmotor) des Nutzfahrzeugs angekuppelt werden kann. Für die Hydraulikpumpe 30 kann jedoch auch ein elektrischer Antrieb, welcher nicht näher dargestellt ist, vorgesehen sein. Die Hydraulikpumpe 30 fördert aus einem Hydraulikflüssigkeitsreservoir 33 im Kreislauf Hydraulikflüssigkeit, welche über eine elektrisch gesteuerte Ventileinrichtung in beidseits des Kolbens 14 angeordnete Druckräume 34 und 35 geleitet wird. Die dem Druckraum 34 zugeführte Hydraulikflüssigkeit unterstützt eine Kolbenbewegung nach links in der Figur und die dem Druckraum 35 zugeleitete Hydraulikflüssigkeit unterstützt eine Kolbenbewegung nach rechts in der Figur.

Die elektrisch gesteuerte Ventileinrichtung beinhaltet beispielsweise ein Ventil oder mehrere Ventile. Das genannte Ventil oder die Ventile wird/werden von einer elektrischen/elektronischen Steuereinrichtung 22 gesteuert. Das in der Figur dargestellte Ventil 20 ist in der dargestellten Stellung so geschaltet, dass die beiden Druckräume 34 und 35 kurzgeschlossen sind, so dass ein druckloser Kreislauf zwischen den beiden Druckräumen 34 und 35 entsteht. Die Hydraulikpumpe 30 ist außer Betrieb. Dies ist bei der Erfindung der normale Fahrbetrieb.

Beim Überschreiten der Kraftschwelle z. B. beim Rangieren, wird die Hydraulikpumpe 30 an den Verbrennungsmotor 27 über die Kupplung 28 angekuppelt und das Ventil 20 aus der dargestellten Stellung in die andere Stellung bewegt. Hierdurch wird für eine Kolbenbewegung nach links, welche von der eingeleiteten Lenkbewegung verursacht wird, Hydraulikflüssigkeit dem Druckraum 34 zur Unterstützung der Kolbenbewegung zugeleitet. Aus dem Druckraum 35 wird Hydraulikflüssigkeit in das Reservoir 33 zurückgebracht. Bei einer Lenkbewegung in entgegengesetzter Richtung wird die Hydraulikflüssigkeit zur Unterstützung der nach rechts gerichteten Kolbenbewegung in den Druckraum 35 eingebracht und aus dem Druckraum 34 Hydraulikflüssigkeit in das Reservoir 33 zurückgeleitet.

Die hydraulische Hilfskraftverstärkereinrichtung 16 kann einen zusätzlichen Druckspeicher 21 für Hydraulikflüssigkeit mit einem Ventil 19 enthalten. Damit ist ein schneller Aufbau der hydraulischen Hilfskraftlenkung sichergestellt.

Der Druckspeicher 21 muss, vor dem Abschalten der Hydraulikpumpe 30 durch die Hydraulikpumpe 30, auf einen Mindestdruck gebracht werden.

Die Zuschaltung und Steuerung der hydraulischen Hilfskraftverstärkereinrichtung 16 erfolgt beim dargestellten Ausführungsbeispiel in Abhängigkeit von einem Drehmomentsensor 23. Dieser erfasst die Betätigungskraft, mit welcher vom Lenkrad 29 ausgehende Lenkbewegungen in das Lenkgetriebe 10 eingeleitet werden. Der Drehmomentsensor 23 kann hierzu am Eingang des Lenkgetriebes 10 vorgesehen sein. Es ist jedoch auch möglich, den Drehmomentsensor 23 an einer geeigneten anderen Stelle zwischen dem Lenkrad 29 und dem Eingang des elektrischen Antriebes 17 vorzusehen. Durch den Drehmomentsensor 23 kann ferner für den elektromechanischen Antrieb die Lenkbewegung, welche vom Lenkrad 29 ausgeht, erfasst und von der Steuereinrichtung 22 ausgewertet werden.

Die hydraulische Hilfskraftverstärkereinrichtung 16 wird durch die Ventileinrichtung 11 im Betrag und in der Drehrichtung, wie im Stand der Technik angesteuert.

Als Kriterium der Zuschaltung und Steuerung der hydraulischen Hilfskraftverstärkereinrichtung 16 kann ferner der vom Elektromotor 17 gezogene Motorstrom ausgewertet werden. Ferner kann eine Fahrgeschwindigkeitsschwelle von z. B. 5 km/h festgelegt werden, unterhalb welcher die hydraulische Hilfskraftverstärkereinrichtung 16 zugeschaltet und, wie beschrieben, gesteuert wird.

Zur Abdeckung der die Kraftschwelle übersteigenden hohen Kräfte kann eine Addition der aus der elektromotorischen Hilfskraftverstärkereinrichtung und der hydraulischen Hilfskraftverstärkereinrichtung 16 gewonnenen Kräfte durchgeführt werden. In diesem Fall kann die Hydraulikpumpe 30 in der Dimensionierung kleiner gehalten werden.

Bei einem fehlerhaften Betrieb oder Ausfall der elektromotorischen Hilfskraftverstärkereinrichtung, welche den Elektromotor 17 und das Getriebe 18 aufweist, kann auf mechanischem Wege eine Unterstützung der Bewegung des Kolbens 14 im Getriebegehäuse 12 bei Überschreitung der Kraftschwelle der vom Lenkstock 32 übertragenen Kraft wie bisher hydraulisch veranlasst werden. Der fehlerhafte Betrieb oder Ausfall kann beispielsweise von der Steuereinrichtung 22 erfasst und das Ventil 20 in die in der Figur nicht dargestellte rechte Position gebracht werden. Ferner wird die Hydraulikpumpe 30 über die Kupplung 28 an den Verbrennungsmotor 27 angekuppelt und in Betrieb gesetzt. Die Ventileinrichtung 11 besitzt schlitzförmige Ventilöffnungen 36 und 37, über welche Hydraulikflüssigkeit dem Druckraum 34 oder dem Druckraum 35 je nach Drehrichtung der Lenkbewegung zugeleitet wird. Bei der Übertragung der Lenkbewegungen auf die Welle 13 über den Torsionsstab 24 wird dieser in Abhängigkeit von den am Lenkstockhebel 32 wirkenden Gegenkräfte tordiert. Diese Tordierung wird auf einen in der Ventilanordnung 11 vorgesehenen Drehschieber übertragen, welcher den Öffnungsquerschnitt der schlitzförmigen Ventilöffnungen 36 und 37 entsprechend einstellt. Die in Abhängigkeit von der Drehrichtung der Lenkbewegung dem Druckraum 34 oder dem Druckraum 35 zugeleitete Hydraulikflüssigkeit unterstützt in Abhängigkeit von der Tordierung des Torsionsstabes 24 die Kolbenbewegung in der entsprechenden Richtung.

Wenn die hydraulische Hilfskraftverstärkereinrichtung 16 mit der elektrischen Ventilsteuerung defekt ist, wird die Handkraft am Lenkrad durch die elektromechanische Hilfskraftverstärkereinrichtung unterstützt.

Auf diese Weise erreicht man eine Erhöhung der Sicherheit des Lenksystems, da zwei unabhängige Unterstützungssysteme für die Servowirkung des Lenkgetriebes 10 vorgesehen sind.

### Bezugszeichenliste

- 10: Schraublenkgetriebe
- 11: Ventileinrichtung
- 12: Getriebegehäuse
- 13: Welle des Lenkgetriebes
- 14: Kolben (Kugelmutter) des Lenkgetriebes
- 15: Gewinde am Kolben des Lenkgetriebes
- 16: hydraulische Hilfskraftverstärkereinrichtung
- 17: Elektromotor
- 18: ins Langsame übersetzendes Getriebe
- 19: Schaltventil für Druckspeicher 21
- 20: Schaltventil
- 21: Druckspeicher
- 22: Steuereinrichtung
- 23: Drehmomentsensor
- 24: Torsionsstab
- 25: Abtriebselement
- 26: Befestigungsstelle des Torsionsstabes
- 27: Verbrennungsmotor
- 28: Kupplung
- 29: Lenkrad
- 30: Hydraulikpumpe
- 31: Segmentwelle
- 32: Lenkstockhebel
- 33: Ausgleichbehälter
- 34: Druckraum
- 35: Druckraum
- 36: Ventilschlitz

## Patentansprüche

1. Nutzfahrzeuglenkung mit einem Lenkgetriebe (Schraublenkgetriebe), welches am Lenkrad (29) eingeleitete Lenkbewegungen über eine hydraulisch unterstützte Hilfskraftverstärkereinrichtung auf einen Lenkstockhebel überträgt, wobei die hydraulische Unterstützung durch eine im Getriebegehäuse drehbar gelagerte Welle und einen durch die Wellendrehung entlang der Welle bewegbaren Kolben gesteuert und auf den Lenkstockhebel übertragen wird, **dadurch gekennzeichnet, dass** eine für den überwiegenden Zeitanteil des Fahrzeugbetriebes geeignete elektromechanische Hilfskraftverstärkereinrichtung vorgesehen ist, die hauptsächlich aus einem Elektromotor (17) und einem ins Langsame übersetzendem Getriebe (18) besteht und das Drehmoment des Motors (17) über das Getriebe (18) auf die drehbar gelagerte Welle (13) übertragen wird, wobei bis zu einem bestimmten Drehmoment, welches zwischen dem Lenkrad (29) und dem Lenkstockhebel (32) wirkt, nur die Drehmomentunterstützung der elektromechanischen Hilfskraftverstärkereinrichtung geschaltet ist.

2. Nutzfahrzeuglenkung nach Anspruch 1, **dadurch gekennzeichnet, dass** bei Überschreitung des bestimmten Drehmomentes zwischen Lenkrad (29) und Lenkstockhebel (32) die hydraulische Hilfskraftverstärkereinrichtung (16) durch hydraulische Druckbeauftragung des Kolbens (14) alleine wirkt.

3. Nutzfahrzeuglenkung nach Anspruch 1, **dadurch gekennzeichnet, dass** bei Überschreitung des bestimmten Drehmomentes zwischen Lenkrad (29) und Lenkstockhebel, die elektromechanische und die hydraulische Hilfskraftverstärkereinrichtung gemeinsam wirken.

4. Nutzfahrzeuglenkung nach einem der Ansprüche 1 bis 5, **dadurch gekennzeichnet, dass** ein Abtriebselement (25) des ins Langsame übersetzendes Getriebe (18) drehfest mit der Welle (13), welche im Gewindeeingriff mit dem Kolben (14) steht, verbunden ist.
